(19) Europäisches Patentamt
European Patent Office
Office européen des brevets

(11) **EP 0 974 921 A1**

(12) **EUROPEAN PATENT APPLICATION**
published in accordance with Art. 158(3) EPC

(43) Date of publication:
26.01.2000 Bulletin 2000/04

(51) Int. Cl.[7]: **G06F 19/00**, G06F 161/00, A63F 9/00

(21) Application number: 97928556.6

(22) Date of filing: 09.06.1997

(86) International application number:
PCT/RU97/00186

(87) International publication number:
WO 97/48064 (18.12.1997 Gazette 1997/54)

(84) Designated Contracting States:
AT BE CH DE DK ES FR GB GR IE IT LI NL PT SE

(30) Priority: 10.06.1996 US 19469 P
17.03.1997 RU 97104057

(71) Applicants:
• Latypov, Nurali Nurislamovich
Moscow, 115569 (RU)
• Latypov, Nurakhmed Nurislamovich
Moscow, 125171 (RU)

(72) Inventors:
• Latypov, Nurali Nurislamovich
Moscow, 115569 (RU)
• Latypov, Nurakhmed Nurislamovich
Moscow, 125171 (RU)

(74) Representative:
Röhl, Wolf Horst, Dipl.-Phys., Dr.
Rethelstrasse 123
40237 Düsseldorf (DE)

(54) **METHOD FOR REMOTE USERS TO PARTICIPATE IN AN INTERACTIVE COMPETITIVE EXAMINATION**

(57) The present invention relates to methods for organising and holding recreational, development and cognitive-type sessions, wherein said methods may be used to increase efficiency when holding a competitive examination by increasing the number of participants, shortening the duration of said examination and improving the reliability and objectivity of marks given according to the participants' results. When holding such an interactive competitive examination, the remote users are connected to the server of a telecommunication network and the user terminals are provided with messages concerning the rules and the beginning of said examination, the users being then registered as participants. All participants simultaneously receive the examination tasks which comprise questions as well as answer variants, one of which at least is correct. All participants are also given the same time interval to select an answer variant. When receiving the messages containing the answer variants selected, the answer variants from each participant are assessed for each task in the examination. A mark is then calculated for each task while each participant who has selected the correct answer is given a number of points proportional to the above-mentioned mark the latter being preferably determined according to the quantity of correct answers for a given task in the competitive examination.

FIG.1

**Description**

The invention relates to methods for organizing and conducting entertaining, educational and informative shows. The invention can be used during the creation of systems for conducting interactive competitions, entertaining and educational games of a competitive character for a large number of remote users through a telecommunications network.

A method is known for automated conducting of tournaments (see application WO95/20795, G06F 19/00, August 3, 1995), wherein the following steps are carried out: notification of a game or tournament variant displayed on electronic indication means which are available to a great number of potential participants of the game, during a predetermined time period, input of identification data of game participants until a certain number of participants is reached, reading the data shown on the electronic indication means; determination of the groups of game participants playing against one another; playing the game and determining the winner of the game round; distribution of the winners into groups of participants of a game of the following round, right up to the final game, completion of the game, sum up the results of the tournament.

The system realizing the method described above comprises an indication device, a device for reading the identification data and a device for processing data, which are combined in one unit in the form of a personal computer; wherein a plurality of such units are connected by means of a modem to a telephone network and a central processor is provided to control the aforesaid units and to sum up the results of the tournament.

Automated implementation of such steps as presenting a variant of the game to potential participants, registering the participants, distributing them into pairs or groups of participants of the tournaments, ensures in the known solution an increase of the fast action of the organization and conduction of entertainment programs and an increase in the objectivity of the taken decisions.

However, the known technical solution has a number of drawbacks, in particular due to its narrow functional purpose. Thus, it is designed for the conduction of competitions of a tournament type, i.e. on a multi-step basis, with the losers dropping out, in order to finally determine one winner. As noted above, the number of participants is limited both by a time limit for registration and by a certain number of registrations, which creates known inconveniencies for potential users. The instrument for organization of the tournaments between rivals is not an instrument for carrying out tournaments as such. In order to determine winners, a large number of independent twin tournaments are carried out, it is not possible to compare all the participants with each other when each task is being performed or at each step.

The object of the invention is to create a method for conducting interactive competition for remote users, ensuring the possibility for any user who has a personal computer or any other means for connection to a telcommunications network (such devices may be mains-supply computers, television sets, electronic secretaries, pagers, telephones), to take part in a real time mode in a competition together with many other users. The conduction of such an interactive quiz game is possible by ensuring the simultaneous participation therein of any number of users of a telecommunications network and the use of a number of new systems for evaluating and processing data, making it possible with a limited number of tasks to determine objectively several winners. Due to the formation and presentation in real time of a dynamic evaluation of the performed tournament tasks, determined, in accordance with the invention, taking into account the complexity of the tournament task, an unweakening interest in the development of events and a specific dramatism in the process of conducting the competition are ensured, which will promote the attraction of an ever growing number of participants. Wherein, the educational character of the tasks in the competitions, formed using information from widely different fields of knowledge will serve as a stimulus for expansion of the general knowledge, erudition of participants of the competitions and for a constant enhancement of their intellectual level.

Thus, the technical result ensured by the invention is enhancement of the effectiveness of conducting competitions, quiz games and other entertainment-educational events, which is expressed by an expansion in the number of participants, almost unlimited within the frame of the resources provided by the telecommunications network, an increase in the fast action of conducting the aforesaid events, and also by enhancement of the objectivity, accuracy, authenticity of evaluating the results of the participants. Furthermore, the invention provides a new type of entertainment for users and can be used to carry out a new type of advertising and marketing campaigns.

The aforesaid result is achieved in that in a method for conducting an interactive competition for remote users, comprising

presenting remote users with the rules of the competition by transmitting information messages from a center for conduction of competition to user terminals;
registering remote users as participants of the competition;
transmitting messages indicating a start of the competition to the participants of the competition from the center for conduction of competition;
exchanging data between user terminals and the center for conduction of competition in the course of executing the tasks of the competition;

evaluating in the center for conduction of competition the results of participation in the competition for all participants;

in accordance with the invention,

a center of a telecommunications network and/or a television studio is used as the center for conduction of interactive competition;

remote users are connected to the center ensuring conduction of interactive competition by means of a telecommunications network;

the simultaneous participation of all remote users in the interactive competition being conducted is ensured during the process of fulfilling competition tasks, wherein competition tasks are simultaneously presented to all participants, the tasks comprising questions and answer variants of which at least one is correct, and simultaneously all participants are given one and the same limited time interval for reply to each task of the competition by selecting a corresponding answer variant;

during reception of messages with the selected answer variants from each of the participants, the received variants for each task of the competition are fixed in said network center:

evaluation of the results of participants is carried out immediately after receipt in said network center of selected answer variants for each task of the competition by determining the rating of a corresponding task of the competition and giving each participant of the competition selecting the correct answer variant a number of points proportional to said rating of the task of the competition.

Wherein the rating of each task of the competition is preferably determined depending on the number of correct answers to a corresponding task of the competition, e.g. according to the equation:

$$Z_i = K_i * X_i / Y_i,$$

where

$Z_i$ is the rating of a corresponding task of the competition;

$X_i$ is the total number of received answers to a corresponding task of the competition;

$Y_i$ is the number of correct answers to a corresponding task of the competition;

$K_i$ is the weight factor for a corresponding task of the competition.

Furthermore, ratings of tasks of the competition may be determined beforehand as values, different combinations of which are values which are not equal to each other. Such ratings may also ensure many different places in a table of results for users with different answers, which will help to determine leaders even where there are a large number of users. It should be noted that such a rating is not as objective as the preceding rating which takes into account the level of complexity of the task for a concrete group of participants.

Wherein, when remote users are being registered as participants of the competition, a message confirming participation is sent to the aforesaid network center, the message containing identification data of the participant and data for billing for participation in the competition.

Preferably, evaluation of the results of participants for each task of the competition are formed as the answer variants are received in the form of a current evaluation, continuously renewed during a limited time interval provided for answering, e.g. in the form of evaluation of the answer to the current task and in the form of a sum evaluation for all prescribed tasks.

And also a current table of leaders is formed by the results of evaluation of participants of the competition for each of the tasks of the competition for display to participants of the competition on their user terminals when an according request is inputted.

The invention is explained by examples of its implementation, illustrated by drawings on which the following are presented:

Fig. 1 - a general functional diagram of the system realizing the claimed method for conducting interactive competition for remote users.
Fig. 2 - a flow chart showing the steps carried out by the device for processing data of the network center (network server), responsible for conducting the competition.

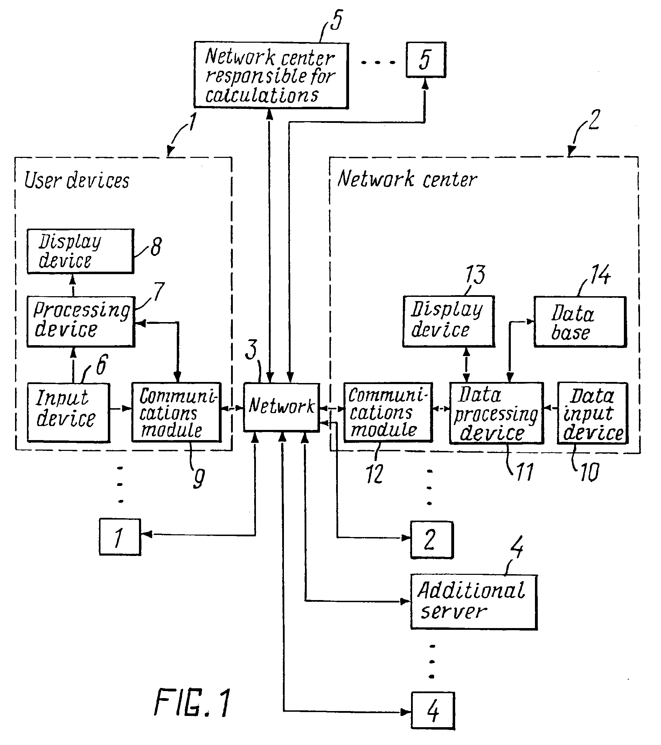

As shown in Fig. 1, the system comprises user devices 1 (computers, mains-supply computers, interactive television sets, telephones, etc.), a network center 2 (e.g. a server of Internet network, providers) responsible for conducting the competition, a telecommunications network 3 connecting user devices 1 to the network center 2. Furthermore, the system may comprise one or more units 4 of "external" organizers of the competition (these may be servers of sponsors, units for preliminary processing of information, servers of additional information or tasks) which are connected to the network center 2, responsible for conducting the competition, by means of the telecommunications network 3, and one or more network centers 5 for carrying out settlements and transactions with participants and winners of the competition.

The user device 1 comprises an input device 6, a data processing device 7, a display device 8 and a communications module 9, by means of which the user device 1 is connected to the network 3 and has access to the server 2, connected to each other by buses for transmission of data.

The server 2 (network center responsible for organizing and conducting interactive competition) comprises a data input device 10, a data processing device 11, a communications module 12, a display device 13 and a database 14, connected to each other by channels for transmitting data.

The network center of the external organizer 4 of the competition performs the function of an external data input when subject competitions or advertisement enterprises, related to conducting the competition, are conducted.

The network center 5, responsible for calculations, in response to requests from the server 2 ensures safe execution of the clearing function between participants, organizers and sponsors of the competitions. Where powerful servers are used, many of the aforementioned functions may be executed in one center.

The system for conducting interactive competition for remote users functions in the following manner.

Preliminarily, the organizers of the competition prepare a page of the competition, which is to be located on the server 2 (e.g. the Internet network), and a program for its processing and control is created. The main part of the program comprises a database of the questions and a database of the answers, the procedure for processing the participants' queries and their answers. In order to ensure loading of the program (or the necessary information, e.g. in a HTML format) through the network by the remote users into their terminal, the network center with the necessary programs should have an identification address.

Encountering the competition on the page, the user obtains information on the rules for conducting the competition and the time when it will start. If the user desires to participate in the competition and agrees with the rules, the user by means of the data input device 6 inputs data confirming his participation in the competition, including identification data of the user sent by means of the communications module 8 to the server 2.

The server 2 identifies the network address of the user and carries out his registration as a participant of the competition.

Simultaneously, from the server 2 or immediately upon input of identification data of the user from his terminal, a request may be directed into the network center 5 to carry out operations relating to settlement (payment of fee, transaction) for participation in the competition.

If users, who want to participate in the competition, joined it after the start of the competition, they are sent a notification of the current state of the competition being conducted, identification and the necessary procedures are carried out.

After completion of the registration of the participants of the competition, at the earlier indicated moment of the start of the competition, a question (task of the competition) or a block of questions with answer variants is sent to the user devices 1 from the server 2 and shown on the user display devices 8. Simultaneously, a time limit given for response to that question is shown on the screen of the user's display device 8, and a count down of the time is shown.

The user selects a concrete variant of the answer to the presented set of questions or using the input device 6 selects a letter-number answer and sends the selected variant, e.g. by pressing the button "input" to the server 2. As a variant, the selected answer may be automatically sent at the end of the time limit. Where the participant does not know the correct answer, he can be provided with possibility of using a random signal generator to select answers. It is understood that information identifying the user, number of the question and selected answer, is provided in the transmitted signal.

Where the participant of the competition selects more than one answer to one and the same task of the competition and sends to the server 2 a corresponding message with selected answer variants, a message is formed in the server 2 relating to an additional payment by the participant, the sum of which is determined taking into account the number of selected answer variants for this task of the competition, and the formed message is sent to the network center 5 responsible for financial transactions with participants of the competition. The number of permissible additional paid answer variants can be set by the organizers.

It is ascertained at the server 2 by means of the data processing device 11 which answer variant was selected by a user, it is received and entered into the database 14, the received answer variant is checked on whether it is right or wrong, and corresponding information is entered into a corresponding region of the database.

The device for processing data 11 for each task of the competition carries out calculation of the general number of received answers and the number of correct answers to the particular question and calculates the rating of the question in accordance with a predetermined form which will be described in detail below. Points are not given to users who have not selected, or did not select in the allotted time, an answer, although in some cases they may be included in the rating for a concrete question. It should be kept in mind that in the preferable variant the calculated ratings change as the number of answers received by the server 2 and the number of correct answer variants change. The first rating of the question is maximum (or, if none of the participants of the competition answered this question - zero), then, as answers are received, it changes, dropping with an increase in the number of correctly answering participants. This current rating may be presented to the user in real time, introducing intrigue and dramatism into the run of the competition.

After the time limit prescribed for answering has expired, the final rating of the question is calculated in the device for processing data 11, and a group of leaders is also formed according to current results. In accordance with a request made by a user, inputted to the data input device 6 and sent to the server 2, (or with silence), information on the results of the rating of the tasks of the competition, on the group of leaders, the current results of the user himself, etc. may be outputted to the user display device 8. The competition procedure may be accompanied by commentaries made by the host, by interactive interviews with the leaders, by showing their photos or video images on the screens, which gives an interactive competition conducted in the Internet network the impression of live television and reality, underlines the competition between participants.

The described procedure for delivery of tasks of the competition, selection of answer variants, verification of the received answers, calculation of the rating of the questions and setting down points to the participants is repeated until completion of the processing of answers to the last question of the competition. After that the data processing device 11 forms a final table of leaders which is sent to all the user devices 1 and is shown on the screens of the users' display devices 8.

Conduction of the competition is terminated by sending to the user devices 1 congratulations to the winners, and if necessary additional information. Simultaneously, a message may be sent from the server 2 to the network center 5 with the request that operations be conducted dealing with settlements with the winners of the competition. Prizes for the winners are derived from fees paid by the users for participation in the game and/or from means provided by sponsors.

The conduction of an interactive competition for remote users using telecommunications networks ensures the possibility for participation of "external" organizers, for example firms (sponsors) which are interested in advertising their goods and services. Such an "external" organizer through a corresponding network center 4 can effect the input of data - tasks of the competition when corresponding subject competitions are conducted or any other additional information of an informative or advertising character, which should be brought to the notice of participants of the competition who are potential consumers of the advertised goods and services. In the case where the competition is carried out with participation of the aforesaid "external" organizers (sponsors), the operations for settlement between the participants and the organizers of the competition may be accordingly changed. Thus, for example, the competition may be completely or partially carried out on means provided by the "sponsor," i.e. be free for the users. After the results of the competition and the sum of the winnings have been determined, a set portion of the aforesaid sum of the winnings may be used to pay for goods obtained from and services provided by corresponding firms. Within the frame of marketing campaigns, firms may present customers buying goods or using services with paid coupons (codes) for free participation in certain competitions, or such coupons may be placed in a package with the goods of all or randomly selected customers. Information on forthcoming competitions may be provided on labels of the goods or over mass media. Wherein, the buyers of goods and services who have not received the right to participate in the competition may follow on TV channels or at their Internet terminals the way the competition is going as fans, thus giving the competition the aura of an entertainment event. The variant with the provision for betting and organization of a totalizator, conduction of multi-step competitions, is not excluded.

The conduction of interactive competition for remote users using telecommunications networks ensures the possibility for use of calculations distributed in the networks and for reception of information from remote users by network centers close to those users, which makes it possible to achieve the necessary reliability and dynamism.

One of the important aspects of the instant invention is related to determination and evaluation of the results of participation in the competition. The main principle is determination of the evaluation (rating) of the question as a value related by an inverse relationship with the ratio of the number of correct answers to the instant question to the number of received answers. In the method according to the invention, different modifications of this main principle may be used. It should be underlined that due to the fact that in the claimed method, on the one hand, the complexity of the question is evaluated objectively, and on the other hand, such an evaluation makes it possible with a limited number of tasks to determine winners from millions of users. With traditional evaluations of answers, for example, one point for a correct answer, after the twentieth question there will only be twenty-one result variants. When the method according to the present invention is used, after the twentieth question, it is potentially possible that the users may have thousands of different result variants. So, with such a method it is possible to objectively determine one or two winners from hundreds of thousands of participants, wherein it is possible to control the process of distributing players in the table of results by giving, if necessary, difficult and easy questions. It should also be noted that in the claimed method for conducting competitions the results do not depend on chance, as in gambling, although this mechanism may be used to conduct distinctive lotteries with a unique factor and random selection of proposed variants. In our erudite and intellectual competitions points are awarded depending on whether the task was correctly fulfilled by the participant of the competition or not. And, in order to provide intrigue, the quantitative rating for a concrete task is not known beforehand, but is determined objectively depending on the complexity of the question, which in turn is determined depending on the number of participants able to correctly fulfill the task.

In one of the possible variants for realizing the invention the possibility may be provided for selecting two or more answer vanants to a question of the competition. Of course, the situation of choosing several answer variants should be accompanied by payment of additional fees in an according amount for participation, e.g. by the sending of a request from server 2 to the network center 5 to carry out the corresponding settlement operations.

In one of the variants of implementing the invention using a predetermined rating for the question (without determination of the rating of the question after the users' answers), in order to ensure the possibility for a wide distribution of the results for a large number of participants with a limited number of questions, evaluation of the questions is particular. Evaluation of the questions should be such so that different combinations of evaluations of the questions would not coincide with other combinations of the evaluations (irrational numbers can serve as an ideal example of such evaluations). Due to such a determination of the evaluations, close evaluations on the basis of ratings, even with a large number of participants, will have their unique places in the table of results after even twenty or thirty questions. Thus, the claimed method in this variant of implementation makes it possible to determine winners among a very large number of participants within a limited time of conduction of the competition.

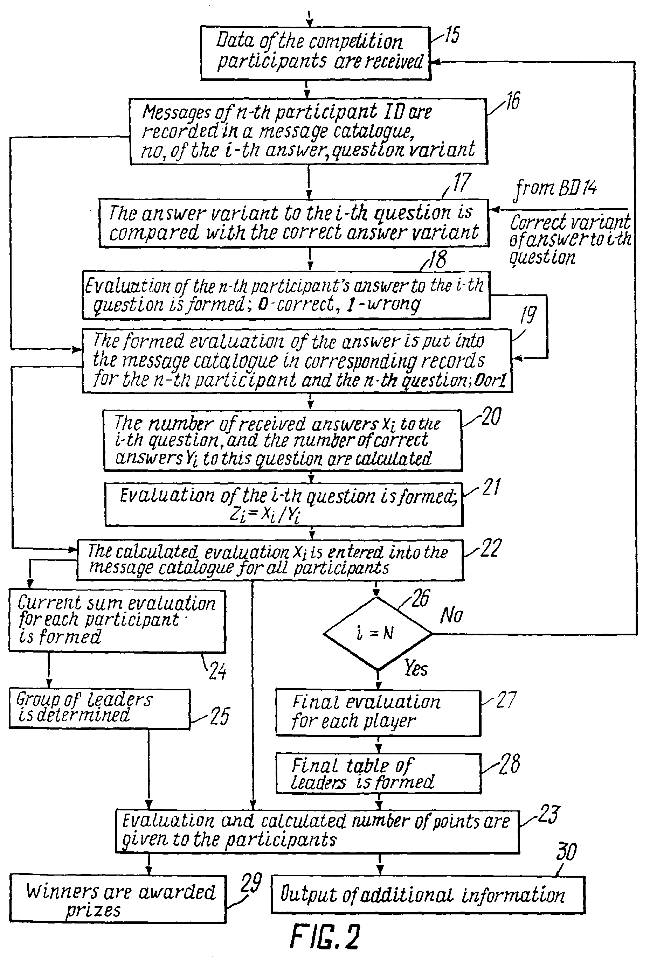

Fig. 2 shows a flowchart of the sequence of operations conducted by the data processing device 11 of the server 2 during evaluation of the results of participation in the competition on the basis of analysis and processing of data received from the participants of the competition and containing the selected answer variants. At each step processing of the messages is done by a corresponding unit which is a subprogram performed by the computer. The operation of these units is related by corresponding logic to fulfill the operations for conduction of the competition.

The data, including identification data of the participant, the number of the question and the selected answer variant, received at step 15 by means of the communications module 12 is registered at step 16, for example in a message catalogue, where each received message of the participant is a record containing at least the aforesaid attributes. At step 17 the answer variant to the ith question selected by a corresponding participant is compared with the correct answer variant. On the basis of comparison the evaluation of the participant's answer to the ith question is formed at step 18. It corresponds to "1" for a correct answer variant and "0" otherwise. At step 19 the formed evaluation of the answer is put into the message catalogue in corresponding records for the nth participant and the ith question. At step 20 the number of received answers $X_i$ to the ith question and the number of correct answers $Y_i$ to this question are calculated. Further, at step 21 an evaluation (rating) of the ith question is formed on the basis of the obtained calculations, for example, as a value directly proportional to the ratio $X_i/Y_i$. At step 22 the calculated evaluation is entered into the message catalogue in the recording lines for all participants correctly answering this question. A corresponding evaluation, for example, in the form of an accordingly calculated number of points may be given to the participants of the competition at step 23. Simultaneously a current sum evaluation for each participant is formed at step 24 from the received evaluations of the preceding questions. The results of the participants of the competition after step 24 are subjected at step 25 to sorting to determine the group of leaders. At step 26 it is checked whether the next question put to the participants is the last one. If the question is not the last one, the next question is sent and the answers are again processed beginning with step 15. If the last question was given, then after the answers to it have been processed, a transition to step 27 takes place to form a final evaluation for each player and determine his place in the general table of results. At step 28 a final table of leaders is formed, after which at step 29 the winners are congratulated and awarded their deserved prizes. Step 30 may also be provided for those desiring to receive additional information about missed possibilities, the dates of conduction of the next competitions, and also explanations in respect of answers to questions given in the competition.

A telecommunications network for collection of data from remote users who have communications devices is necessary in order to realize the method according to the invention. For convenience in conducting different competitions of different character, in addition to a telecommunications network and user's computer, it is necessary to have means for processing transmitted and received messages. Such means may be made in the form of a program performed with a server, performing the necessary manipulations with messages and forming a database for the competition. Most preferable from the point of view of realizing the claimed method is the Internet network, ensuring the possibility for sending information to users and receiving replies therefrom. Wherein processing of all the messages may be performed at at least one of the servers. Dynamic tasks may be sent by users in the form of applets written in Java, while the user should select the action variant which in his opinion is correct. Variants of realization of the competitions are possible with very different combinations of devices and technologies, for example, Internet and television, using television and a telephone center. In the latter case during a show-competition translated over television, questions are given and answer variants are shown. A telephone number is provided for each answer variant. The viewer-user should call that number if he has selected a corresponding answer. A computer in the telephone center ensures determination of the number of the calling subscriber and registration of the telephone number used by this subscriber. A complete connection and oral answer is not required. Then processing is carried out in accordance with the method described above. Not all television viewers want to actively participate in the competition, but almost all of them will have this possibility. When competitions are conducted in accordance with the invention it is possible to organize a particular page for viewer-fans. Interactive television, telephones, pagers, personal communicators, computers, any devices making it possible for a user to transmit to the processing center his answer may be used to conduct competitions of the proposed type. The claimed method for conducting competitions makes it possible to objectively determine leaders from even a very large number of participants.

In order to collect a library of questions for competitions, their reception from participants and fans may be organized, wherein awards may be given for the best questions.

Quiz programs may be conducted with a plurality of stages, with practically any kind of subjects.

Firms, which are not closely related to show business, may use quiz programs as a method for marketing their goods. For example, a firm may indicate on the labels of goods and during advertising the time when the next show will be conducted, and individual buyers with goods will receive codes giving them the right to free participation in such quiz shows. Taking into account the large prizes for winners of competitions, this will create interest among buyers when these goods are sold. Furthermore, during the conduction of competitions viewers and participants may be shown advertisements of the firm, in an obvious or hidden form, as questions about the firm itself or its goods and services. Knowing about such information, potential participants of competitions will try to learn more about the firm and its products, which is very important for the firm from the point of view of enhancing its competiveness. Individual questions at the quiz shows, information on participants may serve as a kind of poll to aid in the setting up of correct marketing policy for the company.

The method for conducting competitions proposed in the invention is not only useful for organizing entertainment events, but may be used for objective evaluation of entrance exams, for the selection of specialists having unique knowledge and capabilities.

**Claims**

1. A method for conducting an interactive competition for remote users, comprising

   presenting remote users with the rules of the competition by transmitting information messages from a center for conduction of competition to user terminals;
   registering remote users as participants of the competition;
   transmitting messages indicating a start of the competition to the participants of the competition from the center for conduction of competition;
   exchanging data between user terminals and the center for conduction of competition in the course of executing the tasks of the competition;
   evaluating in the center for conduction of competition the results of participation in the competition for all participants;
   characterized in that,
   a center of a telecommunications network and/or a television studio is used as the center for conduction of interactive competition;
   remote users are connected to the center ensuring conduction of interactive competition by means of a telecommunications network;
   the simultaneous participation of all remote users in the interactive competition being conducted is ensured during the process of fulfilling competition tasks, wherein competition tasks are simultaneously presented to all participants, the tasks comprising questions and answer variants of which at least one is correct, and simultaneously all participants are given one and the same limited time interval for reply to each task of the competition by selecting a corresponding answer vanant;
   during reception of messages with the selected answer variants from each of the participants, the received variants for each task of the competition are fixed in said network center;
   evaluation of the results of participants is carried out immediately after receipt in said network center of selected answer variants for each task of the competition by determining the rating of a corresponding task of the competition and giving each participant of the competition selecting the correct answer variant a number of points proportional to said rating of the task of the competition.

2. A method according to claim 1, characterized in that a rating for each task of the competition is determined depending on the number of correct answers to a corresponding task of the competition.

3. A method according to claim 2, characterized in that the rating of each task of the competition is determined by the equation

$$Z_i = K_i * X_i/Y_i,$$

   where

   $Z_i$ is the rating of the ith task of the competition;
   $X_i$ is the total number of received answers to the ith task of the competition;
   $Y_i$ is the number of correct answers to the ith task of the competition;
   $K_i$ is the weight factor for the ith task of the competition.

**4.** A method according to claim 1, characterized in that ratings of tasks of the competition are determined as values, different combinations of which are values which are not equal to each other.

**5.** A method according to any of claims 1-4, characterized in that when remote users are being registered as participants of the competition, a message confirming participation is sent to said network center, the message containing identification data of the participant and data for billing for participation in the competition.

**6.** A method according to any of claims 1-5, characterized in that evaluation of the results of participants for each task of the competition are formed as the answer variants are received in the form of a current evaluation, continuously renewed during a limited time interval provided for answering.

**7.** A method according to any of claims 1-6, characterized in that evaluation of the results of each participant are formed in the form of evaluation of the answer to the current task and in the form of a sum evaluation for all prescribed tasks.

**8.** A method according to any of claims 1-7, characterized in that a current table of leaders is formed by the results of evaluation of participants of the competition for each of the tasks of the competition for display to participants of the competition on their user terminals when an according request is inputted.

FIG.1

```
                              ┌─────────────────────────┐ ⟋15
                              │ Data of the competition │
                              │ participants are received│◄────────────┐
                              └─────────────────────────┘              │
                                        │                              │
                      ┌──────────────────────────────────┐ ⟋16        │
                      │ Messages of n-th participant ID are│            │
                      │ recorded in a message catalogue,   │            │
                      │ no, of the i-th answer, question variant│       │
                      └──────────────────────────────────┘            │
                                        │                              │
              ┌──────────────────────────────────┐ ⟋17    from BD 14   │
              │ The answer variant to the i-th question is│◄──────────  │
              │ compared with the correct answer variant  │  Correct variant
              └──────────────────────────────────┘         of answer to i-th
                                        │                   question
              ┌──────────────────────────────────┐ ⟋18
              │ Evaluation of the n-th participant's answer to the i-th│
              │ question is formed; 0-correct, 1-wrong │       ⟋19
              └──────────────────────────────────┘
              ┌──────────────────────────────────┐
              │ The formed evaluation of the answer is put into│◄──
              │ the message catalogue in corresponding records  │
              │ for the n-th participant and the n-th question; 0or1│
              └──────────────────────────────────┘
                                        │
              ┌──────────────────────────────────┐ ⟋20
              │ The number of received answers Xi to the│
              │ i-th question, and the number of correct │
              │ answers Yi to this question are calculated│
              └──────────────────────────────────┘
              ┌──────────────────────────────────┐ ⟋21
              │ Evaluation of the i-th question is formed;│
              │         Zi = Xi/Yi                        │
              └──────────────────────────────────┘
              ┌──────────────────────────────────┐ ⟋22
              │ The calculated evaluation Xi is entered into the│
              │ message catalogue for all participants           │
              └──────────────────────────────────┘
```

$Z_i = X_i / Y_i$

Current sum evaluation for each participant is formed — 24

$i = N$ — 26 — No

Group of leaders is determined — 25

Yes

Final evaluation for each player — 27

Final table of leaders is formed — 28

Evaluation and calculated number of points are given to the participants — 23

Winners are awarded prizes — 29

Output of additional information — 30

**FIG. 2**

## INTERNATIONAL SEARCH REPORT

| | International application No. |
|---|---|
| | PCT/RU 97/00186 |

**A. CLASSIFICATION OF SUBJECT MATTER**

IPC$^6$: G06F 19/00, 161: 00, A63F 9/00

According to International Patent Classification (IPC) or to both national classification and IPC

**B. FIELDS SEARCHED**

Minimum documentation searched (classification system followed by classification symbols)

IPC$^6$: G06F 15/00, 17/60, 19/00, 161: 00, A63F 9/00, 9/22, 9/24

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A,P | WO 97/005557 A1 (LVOV DENIS ERNESTOVICH) 13 February 1997 (13.02.97), pages 18-20, figs 1-2d | 1-8 |
| A | JP 06210068 A (MATSUMOTO JINKO) 2 August 1994 (02.08.94) | 1-8 |
| A | JP 06246067 A (SEGA ENTERP LTD) 6 September 1994 (06.09.94) | 1-8 |
| A,D | WO 95/20795 A1 (EIBA, Peter) 3 August 1995 (03.08.95), the absract | 1-8 |
| A | RU 95103479 A1 (WALKER ASSET MANAGEMENT LIMITED PARTNERSHIP) 27 December 1996 (27.12.96) | 1-8 |
| A | GB 2287342 A (WALKER ASSET MANAGEMENT LIMITED PARTNERSHIP) 13 September 1995 (13.09.95), the abstract | 1-8 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 September 1997 (10.09.97) | 9 October 1997 (09.10.97) |

| Name and mailing address of the ISA/ | Authorized officer |
|---|---|
| R.U. | |
| Facsimile No. | Telephone No. |

Form PCT/ISA/210 (second sheet) (July 1992)